# EUROPEAN PATENT APPLICATION

(11) **EP 4 254 026 A1**
(43) Date of publication of application: **04.10.2023**
(21) Application number: 23000047.3
(22) Date of filing: 27.03.2023
(51) Int. Cl.: G02B 6/028

(54) **OPTICAL FIBER WITH AN ATTENUATION REDUCTION REFRACTIVE INDEX (RI) PROFILE**

(30) Priority: 31.03.2022 IN 202211019730
(71) Applicant: Sterlite Technologies Limited, 122102 Haryana (IN)
(72) Inventor: ANANT, Pawale, Gurugram, Haryana 122102 (IN); MILIND, Patil, Gurugram, Haryana 122102 (IN); ANAND, Pandey, Gurugram, Haryana 122102 (IN); PANKAJ, Priyadarshi, Gurugram, Haryana 122102 (IN)
(74) Representative: Maiello, Helenio Francesco

(57) **Abstract**

The present disclosure relates to an optical fiber having a core extending parallelly along a central axis of the optical fiber, an inner cladding surrounding the core and an outer cladding surrounding the inner cladding. In particular, the core is up-doped with first and second up-dopants and the inner cladding is up-doped with the second up-dopant. Moreover, the outer cladding is un-doped. Further, the optical fiber has an attenuation of less than 0.2 at a wavelength of 1625 nanometers (nm), the attenuation of less than 0.18 at a wavelength of 1550 nm, or the attenuation of less than 0.32 at a wavelength of 1310 nm and a cable cutoff in a range of 1186 nanometers (nm) to 1194 nm.

## Description

### TECHNICAL FIELD

Embodiments of the present disclosure relate to the field of optical fiber cables and more particularly relates to an optical fiber with an attenuation reduction Refractive Index (RI) profile.

This application claims the benefit of Indian Application No. 202211019730 titled "OPTICAL FIBER WITH AN ATTENUATION REDUCTION REFRACTIVE INDEX (RI) PROFILE" filed by the applicant on 31.03.2022, which is incorporated herein by reference in its entirety.

### Background Art

Optical fiber is increasingly being used for a variety of applications, including broadband applications such as voice, video and data transmissions. It is a current trend in telecommunications to use optical fibers in place of the more conventional transmission media. As a result, fiber optic communication systems are becoming prevalent in part because service providers want to deliver high bandwidth communication capabilities to customers.

Telecommunication systems for underground and undersea applications, require optical fibers that can transmit signals to longer distances without any degradation. Optical fiber can be used as a communication medium for telecommunication and networking applications because it is flexible and can be bundled into cables. Although referred to as "optical fiber," optical fiber is not restricted to communicating light in the visible spectrum, and may transmit light signals of higher, or lower, wavelengths. An optical fiber (e.g., glass, plastic) carries light along its length. Light is kept in the core of the optical fiber by internal reflection and the optical fiber acts as a waveguide.

Optical fibers are especially advantageous for communications because light propagates through the fiber with less attenuation than for electrical signals using metal wires. However, as a light signal travels in an optical fiber, the signal is attenuated, due to both material effects and waveguide effects. Waveguide effects include two categories of optical bending loss, microbending and macrobending losses. Moreover, attenuation of optical signals in optical fibers caused by the fiber or cable bending has been one of the major concerns in fiber, cable and photonic device manufacturing.

Attenuation and bend loss can contribute to some degradation of the signals transmitted through the optical fiber. The increased attenuation can disrupt quality of the signals which are being transmitted in the optical fiber. Moreover, a part of the degradation of optical performance of the optical fiber may be attributed to stress in the optical fiber, a part of which may be inherited from the stress in a glass preform from which the optical fiber was drawn.

Residual stress, that is, stress that has been frozen into the fiber upon cooling from the draw temperature, is one cause of increased transmission loss. The need for glass stress control in optical fiber design and manufacture is always of some concern but is particularly important in the manufacture of optical fibers of high numerical aperture (NA).

WIPO patent application no. WO2018093451 titled "Optical fibers having a varying clad index and methods of forming same" discloses an optical fiber with low attenuation where a core of the optical fiber is up-doped and chlorine (CI) is present in an outer cladding of the optical fiber.

US patent application no. US9658394B2 titled "Low attenuation fiber with viscosity matched core and inner clad" discloses a single mode optical fiber having a core made from silica and less than or equal to about 6.5 weight % germania and having a maximum relative refractive index Δ_{1MAX}. In particular, the core of optical fiber is up-doped and an inner cladding is down doped.

US patent application no. US2018031761A1 titled "Low loss single mode fiber with chlorine doped core" discloses an attenuation reduction through adding chlorine in a core of an optical fiber.

Chinese patent application no. CA2630557A1 titled "Single mode optical fiber with improved bend performance" discloses a method of producing an optical fiber where fluorine is doped in an inner cladding during consolidation process.

US patent application no. US11237321B2 titled "High chlorine content low attenuation optical fiber" discloses optical waveguide fibers comprising a core comprising silica and greater than or equal to 1.5 wt % chlorine and less than 0.6 wt % fluorine, the core having a refractive index Δ1MAX, and a cladding region having a refractive index Δ2MIN surrounding the core, where Δ1MAX>Δ2MIN.

However, there are a few drawbacks in the current technologies employing optical fibers with reduced attenuation and bend loss. The optical fibers disclosed in the prior arts are not optimized to reduce stress in the optical fiber preform. Moreover, the fluorine (F) doped cladding disclosed in the prior arts has a much lower viscosity, which results in high draw induced stress in the core region. The high stress in the core region reduces the glass relaxation, which increases the Rayleigh scattering loss. Furthermore, the stress effect reduces the core refractive index through stress-optic effects, making it difficult to achieve the core refractive index change required for making a single mode fiber.

Accordingly, to overcome the disadvantages of the prior arts, there is a need for a technical solution that overcomes the above-stated limitations in the prior arts. The present disclosureprovides an optical fiber with optimized fabrication with reduced stress and reduced attenuation in optical fiber preform and the optical fiber.

### SUMMARY OF THE DISCLOSURE

Embodiments of the present disclosure provide an optical fiber, comprising a core extending along a central axis of the optical fiber and up-doped with at least a first up-dopant and a second up-dopant, an inner cladding surrounding the core and up-doped with at least the second up-dopant and an outer cladding surrounding the inner cladding. The outer cladding is un-doped.

According to the first aspect of the present disclosure, the core, the inner cladding, and the outer cladding has a refractive index Δ1, a refractive index Δ2, and a refractive index Δ3, respectively, such that the refractive index Δ1 is greater than the refractive index Δ2 and the refractive index Δ2 is greater than the refractive index Δ3. In particular, the core has a relative refractive index Δ1% that is in range 0.2 % to 0.4 %, the inner cladding has a relative refractive index Δ2% that is in range 0.01 % to 0.05 %, and the outer cladding has a relative refractive index Δ3% that is equal to 0%.

The relative refractive index Δ2% of the inner cladding is radially distributed with a maximum value Δ2max and a minimum value Δ2min, wherein the maximum value Δ2max is 0.03 and the minimum value Δ2min is 0.02.

According to a second aspect of the present disclosure, the core up-doped with first and second up-dopants, the inner cladding up-doped with the second up-dopant, and the un-doped outer cladding generates a Refractive Index (RI) profile that is defined by a core peak and an inner cladding peak. In particular, the core peak is greater than the inner cladding peak.

In accordance with an embodiment of the present invention,the core peak and the inner cladding peak has a peak radial distance therebetween. The radial distance is in a range of 9 micrometres (µm) to 10 µm.

According to a third aspect of the present disclosure,the core and the inner cladding has the second up-dopant in first and second concentrations, respectively, wherein the first concentration is less than the second concentration. In particular, the first concentration of the second up-dopant in the core is in a range of 41% to 43% and the second concentration of the second up-dopant in the inner cladding 104 is in a range of 57% to 59%. Moreover, the concentration of the first up-dopant in the core is in a range of 0.25% to 0.3%.

According to a fourth aspect of the present disclosure, the core and the inner cladding has the second up-dopant in the first and second volumes. The first volume is less than the second volume. The first volume of the second up-dopant in the core is in a range of 1850 ppm to 2100 ppm and the second volume of the second up-dopant in the inner cladding is in a range of 2490 ppm to 2800 ppm. Further, the volume of the first up-dopant (*i.e*., Ge) in the core may be in a range of 2500 Parts Per Million (ppm) to 3000 ppm.

According to a fifth aspect of the present disclosure, an attenuation of the optical fiber at a wavelength of 1625 nanometers (nm) is less than 0.2, wherein the attenuation of the optical fiber at a wavelength of 1550 nm is less than 0.18, and wherein the attenuation of the optical fiber at a wavelength of 1310 nm is less than 0.32, (ii) a macro bend loss of the optical fiber for 10 turns, 30mm Mandrel diameter and at a wavelength of 1625 nm is less than 0.3 db/km, wherein the macro bend loss in the optical fiber for 1 turn, 20mm Mandrel diameter at the wavelength of 1625 nm is less than 1.5 db/km, wherein the macro bend loss of the optical fiber for 10 turn, 30mm Mandrel diameter at a wavelength of 1550 nm is less than 0.1 db/km, and wherein the macro bend loss of the optical fiber for 1 turns, 20mm Mandrel diameter at the wavelength of 1550 nm is less than 0.5 db/km, and (iii) a cable cutoff of the optical fiber is in a range of 1186nm to 1194 nm.

The core has a radius R1 that is in range of 4 µm to 4.5 µm, wherein the inner cladding has a radius R2 that is in a range of 14 µm to 15 µm, and the outer cladding has a radius R3 that is in range 61.5 µm to 62.5 µm. The radius R1, the radius R2, and the radius R3 is given by an average ratio (R3 - R1) / (R2 - R1), and the average ratio is in a range of 5.52 µm to 5.75 µm.

In accordance with an embodiment of the present invention, the core has a thickness T1 and the inner cladding has a thickness T2 such that the thickness T2 is greater than the thickness T1.

The foregoing solutions of the present disclosure are attained by employing an optical fiber with an attenuation reduction Refractive Index (RI) profile in telecommunication networks.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a snapshot illustrating a cross-sectional view of an optical fiber in accordance with an embodiment of the present invention;

Fig. 2 is a graphical representation illustrating a Refractive Index (RI) profile of the optical fiberin accordance with an embodiment of the present invention;

Fig. 3 is a snapshot illustrating the concentration profiles of first up dopant and second up dopant in the core, inner cladding, and the outer cladding along with a resultant refractive index profile in accordance with another aspect of the present invention.

### ELEMENT LIST

Optical fiber - 100
Core - 102
Inner cladding - 104
Outer cladding - 106
Central axis - 108
Graph - 200
Curve - 202
Core peak - 204
Inner cladding peak - 206
Graph - 300
First curve - 302
Second curve - 304
Third curve - 306
Transition point - 308

The optical fiber draw tower is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.
Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "including" and "including but not limited to" are used interchangeably.

**The following brief definition of terms shall apply throughout the present disclosure:**
The term "core" of an optical fiber as used herein is referred to as the inner most cylindrical structure present in the center of the optical fiber, that is configured to guide the light rays inside the optical fiber.

The term "Cladding" of an optical fiber as used herein is referred to as one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

The term "refractive index" as used herein is referred to as the measure of change of speed of light from one medium to another and is particularly measured in reference to speed of light in vacuum. More specifically, the refractive index facilitates measurement of bending of light from one medium to another medium.

The term "relative refractive index" as used herein is referred to as the ratio of refractive index of one medium to the refractive index of other medium.

The term refractive index profile" of the optical fiber as used herein is referred to as the distribution of refractive indexes in the optical fiber from the core to the outmost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

The term "core peak" as used herein is referred to as the maximum refractive index value of the core of the optical fiber. The core peak is more significant in the graded index fiber as for the step index fiber, the refractive index of the core is same throughout.

The term "Cladding peak" as used herein is referred to as the maximum value of the refractive index of the one or more layers of cladding of the optical fiber.

The term "up-doping" as used herein is referred to as adding doping materials to facilitate increase in the refractive index of a particular layer or part of optical fiber. The materials configured to facilitate up-doping are known as up-dopants.

The term "down-doping" as used herein is referred to as adding doping materials to facilitate decrease in the refractive index of a particular layer or part of optical fiber. The materials configured to facilitate down-doping are known as down-dopants.

### Concentration of Up dopant:

The term "first concentration" as used herein is referred to as the percentage of the up-dopant materials present in the core that facilitate an increase in refractive index of the core of the optical fiber.

The term "second concentration" as used herein is referred to as the percentage of the up-dopant material present in the inner cladding that is configured to facilitate an increase in the refractive index of the inner cladding of the optical fiber.

The term "first volume" as used herein is referred to as the count of the up-dopant present per million of the elements of the core, *i.e*., concentration of the up-dopant in the core in (ppm), that is configured to facilitate an increase in refractive index of the core of the optical fiber.

The term "second volume" as used herein is referred to as the count of the up-dopant present per million of the elements of the inner cladding *i.e.*, concentration of the up-dopant in the inner cladding in (ppm), that is configured to facilitate an increase in refractive index of the core of the optical fiber.

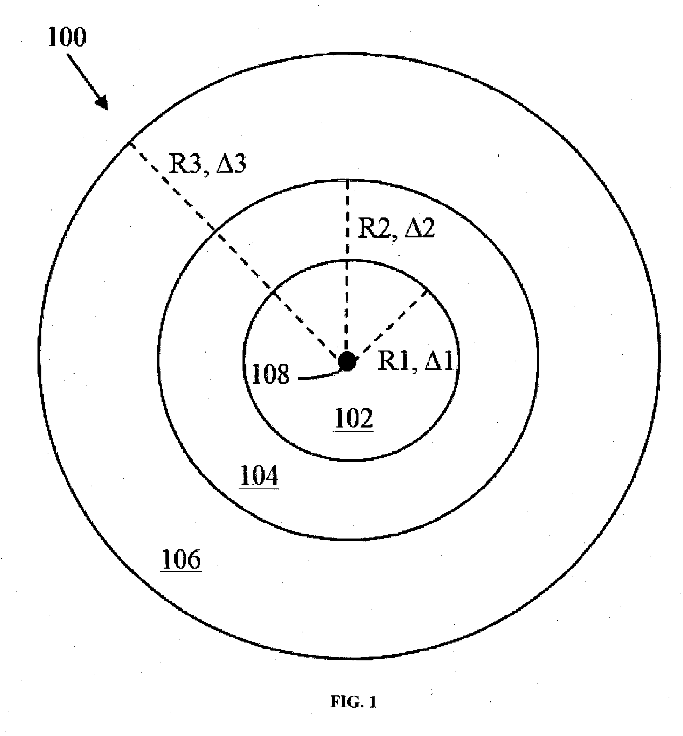

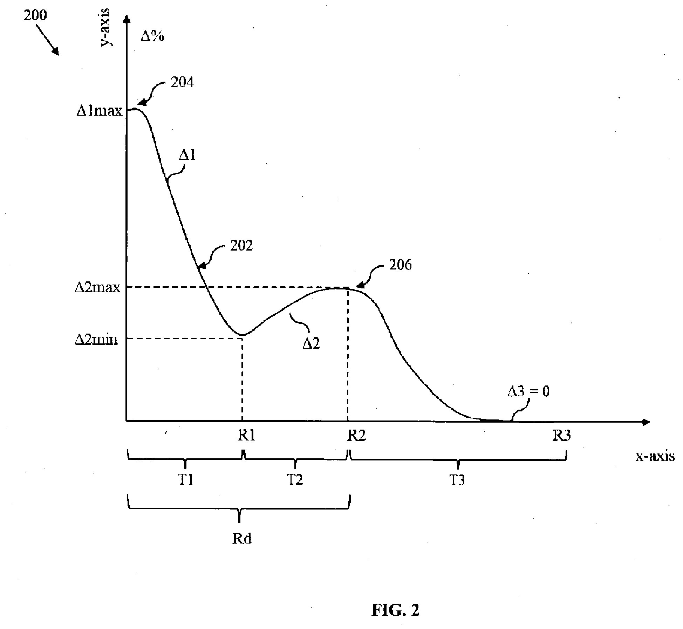

Fig. 1 is a snapshot illustrating a cross-sectional view of an optical fiber in accordance with an embodiment of the present invention. The optical fiber 100 may be fabricated to have reduced attenuation without increasing macro bend losses. In particular, the optical fiber 100 may have a core 102, an inner cladding 104, and an outer cladding 106. Moreover, the optical fiber 100 may have a central axis 108 such that the core 102 may be arranged along the central axis 108 running longitudinally, *i.e.,* generally parallel to the central axis 108. The optical fiber 100 may have a Refractive Index (RI) profile (shown in FIG. 2) that may be generated by virtue of the core 102 being up doped with Germanium (Ge) and Chlorine (CI), the inner cladding 104 being up doped with Cl and the outer cladding being undoped and made up of pure silica. Specifically, by up doping the core 102 and the inner cladding 104 with Cl, the RI profile having an upward peak in the inner cladding region may be generated, that may further facilitate the optical fiber 100 to have reduced attenuation without increasing macro bend losses.

The core 102 may be a cylindrical fiber that may run along a length of the optical fiber 100 and may be configured to guide an optical signal. In particular, the core 102 may be made up of a material selected from at least one of, a pure silica glass, Silicon tetrachloride (SiCl₄), Germanium tetrachloride (GeCl₄), Chlorine gas (Cl₂), and the like. Preferably, the core 100 may be made up of a silica glass doped with a first up-dopant and a second up-dopant. Alternatively, the present disclosure is intended to include and/or otherwise cover any type of the material for the core 102, including known, related, and later developed materials.

Specifically, the core 102 may be up-doped with the first and second up-dopants that may increase values of net refractive index of the optical fiber 100facilitating to control macro bend losses. The first and second up-dopants may be Germanium (Ge), and Cl₂, respectively.

In some aspects of the present disclosure, a concentration *(i.e.,* a weight percentage (wt. %)) of the first up-dopant in the core 102 may be in a range of 0.25% to 0.3%. Preferably, the concentration of the first up-dopant in the core 102 may be 0.3%.

The second up-dopant may have a first concentration in the core 102. The first concentration *(i.e.,* a weight percentage (wt. %)) of the second up-dopant in the core 102 may be in a range of 41% to 43%. Preferably, the first concentration of the second up-dopant in the core 102 may be 42%.

In some aspects of the present disclosure, a volume of the first up-dopant *(i.e.,* Ge) in the core 102 may be in a range of 2500 Parts Per Million (ppm) to 3000 ppm. Particularly, the volume of the first up-dopant *(i.e.,* Ge) in the core 102 may be 3000 ppm. And, the second up-dopant may have a first volume in the core 102. The first volume of the second up-dopant may be in a range of 1850 ppm to 2100 ppm and the first volume of the second up-dopant (*i.e.,* Cl₂) in the core 102 may be 1950 ppm. Further, the second up-dopant may have a second volume in the inner cladding 104. The second volume of the second up-dopant may be in a range of 2490 ppm to 2800 ppm and the second volume of the second up-dopant (*i.e*., Cl₂) in the inner cladding 104 may be 2680 ppm.

In accordance with an embodiment of the present invention, the second up-dopant (*i.e*., Cl₂) may be used to up dope the core 102 as Cl₂ and facilitate in reduction of stress in an optical fiber preform and in the optical fiber 100. In other words, the second up-dopant (*i.e*., Cl₂) may act as a core viscosity reduction agent such that the core 102 becomes softer (*i.e.,* easy to flow to provide relaxation and ease in releasing of stress from the hot optical fiber preform and resultant optical fiber.

The core 102 may have a radius R1, a thickness T1 and a refractive index Δ1. The radius R1 may be in a range of 4 micrometres (µm) to 4.5 µm. Preferably, the radius R1 may be 4 µm and the thickness T1 may be less than 4.5 µm. Preferably, the thickness T1 may be equal to the radius R1.

In some aspects of the present disclosure, the refractive index Δ1 may be in a range of 4.4 to 5.4 The core 102 may have a core alpha in a range of 3 to 5. Further, the core 102 may have a Mode Field Diameter (MFD) in a range of 8.85 to 9.2. Particularly, the refractive index Δ₁ in the range of 4.4 to 5.4, the core alpha in the range of 3 to 5, and the MFD in the range of 8.85 to 9.2 may facilitate the optical fiber 100 to demonstrate desirable parameters such as, but not limited to, low attenuation, low MFD, high cutoff, low dispersion, and low macro bending loss, and the like.

When the core 102 has the refractive index Δ₁ that is not within the range of 4.4 to 5.4, the core alpha that is not in the range of 3 to 5, and the MFD that is not in the range of 8.85 to 9.2, then optical fiber 100 may demonstrate undesirable parameters such as high attenuation, high MFD, less power in a core region, low cutoff, high macro bending loss, high dispersion, and poor lightening in confined space.

In accordance with an embodiment of the present invention, the inner cladding 104 may be made up of a material selected from at least one of, a pure silica glass, a doped silica glass, and the like. Alternatively, the inner cladding 104 may be made up of a combination of SiCl₄ and Cl₂. The inner cladding 104 may be made up of a silica glass doped with the second up-dopant.

Aspects of the present disclosure are intended to include and/or otherwise cover any type of the material for the inner cladding 104, including known, related, and later developed materials. The inner cladding 104 may be up-doped with the second up-dopant increasing values of net refractive index of the optical fiber 100 and facilitates control macro bend losses in the optical fiber 100. Additionally, the core 102 and the inner cladding 104 may be doped with the second up-dopant *(i.e.,* Cl₂) to avoid generation of stress in the optical fiber 100.

In some aspects of the present disclosure, the inner cladding 104 may have the second up-dopant (*i.e*., Cl₂) in a second concentration (*i.e*., a weight percentage (wt. %)) may be in a range of 57% to 59%. Preferably, the second concentration of the second up-dopant (*i.e.,* Cl₂) in the inner cladding 104 may be 58%. Further, the inner cladding 104 may have the second up-dopant in a second volume in a range of 2490 ppm to 2800 ppm. Preferably, the second volume of the second up-dopant in the inner cladding 104 may be 2680 ppm.

In some aspects of the present disclosure, the first concentration may be lower than the second concentration. Particularly, the second concentration may be higher as compared to the first concentration to accommodate the consolidation of the inner cladding 104 that happens prior to the consolidation of the core 102. The addition of the second up-dopant (*i.e.,* Cl₂) in the core 102 and in the inner cladding 104 may further reduce the stress in the optical fiber preform and hence in the optical fiber 100, thus generating a peak surrounding an inner clad region. Specifically, the addition of the second up-dopant may reduce viscosity that may facilitate to avoid causing stresses between the core 102 and the inner cladding 104 of the optical fiber 100. Further, the addition of the second up-dopant in the core 102 and the inner cladding 104 may increase the value of net refractive index of the optical fiber 100 that may further facilitate control of the macro-bend loss of the optical fiber 100. Specifically, the addition of the second up-dopant may facilitate to control the macro-bend loss to less than 0.1Decibel/Kilometres (dB/Km) at a wavelength of 1550 nanometers (nm) at 30mm Mandrel diameter for 10 turns and the macro-bend loss may be controlled to less than 0.3 dB/Km at a wavelength of 1625 nm for 30 mm Mandrel diameter for 10 turns.

In accordance with an embodiment of the present invention, the addition of the first dopant in the core 102 facilitates the increase of the refractive index of the core 102. However, a concentration of the first dopant is not increased in the optical fiber 100 to control attenuation. Thus, the attenuation in the optical fiber 100 may be controlled only through the addition of the first and second up-dopants in the core 102 and the addition of the second up-dopant in the inner cladding 104 and keeping the overall concentration of the first up-dopant in the optical fiber 100 consistent.

In some aspects of the present disclosure, at a wavelength of 1310, the attenuation of the optical fiber 100 may be controlled to a value that may be in a range of 0.32 to 0.324. Alternatively, at a wavelength of 1550, the attenuation of the optical fiber 100 may be controlled to a value that may be in a range of 0.179 to 0.184.

In accordance with an embodiment of the present invention, the inner cladding 104 may have a radius R2, a thickness T2, and a refractive index Δ2. Specifically, the radius R2 of the inner cladding 104 may be in a range of 14 µm to 15 µm. Preferably, the radius R2 of the inner cladding 104 may be 14.5um.

In some aspects of the present disclosure, the second up-dopant may be doped in the inner cladding 104 in a way such that the concentration of the second up-dopant in the inner cladding 104 varies along the radius R2 of the inner cladding 104. Further, the thickness T2 of the inner cladding 104 may be equal to a difference between a numerical value of the radius R2 of the inner cladding 104 and a numerical value of the radius R1 of the core 102 (*i.e.*, T2 = R2 - R1). Additionally, the thickness T2 of the inner cladding 104 may be greater than the thickness T1 of the core 102. The thickness T2 of the inner cladding 104 may be in a range of 10 µm to 10.5 µm.

The inner cladding 104 may have a relative refractive index Δ2% that may be in a range of 0.01 to 0.05. The relative refractive index Δ2% of the inner cladding 104 may be radially distributed along the central axis 108 of the optical fiber 100. Particularly, the relative refractive index Δ2% of the inner cladding 104 may have a maximum value Δ2max and a minimum value Δ2min (as shown later in FIG. 2). Moreover, the relative refractive index Δ2% may be less than the relative refractive index Δ1% of the core 102. Further, the refractive index Δ2 of the inner cladding 104 may be less than the refractive index Δ1 of the core 102. In other words, the refractive index Δ1 of the core 102 may be higher than the refractive index Δ2 of the inner cladding 104 such that the optical signal that propagates through the core 102 and that strikes a boundary between the core 102 and the inner cladding 104 at an angle that may be smaller than a critical angle will reflect into the core 102 by total internal reflection.

In accordance with an embodiment of the present invention, the outer cladding 106 may surround the inner cladding 104 may be made up of a material selected from at least one of, a pure silica glass, and the like. In particular, the outer cladding 106 may be made up of a silica glass that may be undoped and have a radius R3, a thickness T3, and a refractive index Δ3. Moreover, the radius R3 may be in a range of 61.5 µm to 62.5 µm, the thickness T3 of the outer cladding 106 may be in a range of 46.5 µm to 48.5 µm. And, the refractive index Δ3 may be equal to 0 such that the refractive index Δ1 of the core 102 may be greater than the refractive index Δ2 of the inner cladding 104 and the refractive index Δ2 of the inner cladding 104 may be greater than the refractive index Δ3 of the outer cladding 106. Further, the radius R1, the radius R2, and the radius R3 may have a predefined ratio in a range of 5.52 µm to 5.75 µm and may be given by the equation (R3 - R1) / (R2 - R1).

In an exemplary example, when the radius R1 is 4 µm, the radius R2 is 14 µm , and the radius R3 is 62.5 µm.

In one aspect of the present disclosure, the core 102 may have the refractive index Δ1 that is between 4.4 to 5.4, relative refractive index Δ1% between 0.33 to 0.36, radius R1 between 4.4 to 4.6, the core alpha between 3.58 to 4.65, and the MFD between 8.85 to 9.2. Particularly, the inner cladding 104 may have the relative refractive index Δ2% between 0.02 to 0.03 and the radius R2 between 14 µm to 15 µm. Moreover, the outer cladding 106 may have the relative refractive index Δ3% of 0 and the radius R3 between 61.5 µm to 62.5 µm. Further, the optical fiber 100 may be fabricated based on the above numerical values and may have a cable cutoff between 1186 nm to 1194 nm.

For example, an optical fiber with the refractive index Δ1 of 4.4, the relative refractive index Δ1% of 0.33, the radius R1 of 4.5, the core alpha of 3.7, the MFD of core 102 of 9.2, the relative refractive index Δ2% of 0.02, the radius R2 14 µm the relative refractive index Δ3% of 0 may demonstrate a cable cutoff of 1186 nm.

In another aspect of the present disclosure, the optical fiber 100 may be fabricated based on the above numerical values. The numerical values may demonstrate an attenuation of 0.321 Decibel/Kilometers (dB/km) at a wavelength of 1310 nm, an attenuation of 0.182 dB/km at a wavelength of 1550 nm, and an attenuation of 0.202 dB/km at a wavelength of 1625 nm. Moreover, the optical fiber 100 fabricated based on the above numerical values may demonstrate a MFD of 8.89 µm at a wavelength of 1310 nm. Further, the optical fiber 100 fabricated based on the above numerical values may have a cutoff wavelength of 1295 nm.

In yet another aspect of the present disclosure, the optical fiber 100 may be fabricated based on the above numerical values may demonstrate a MFD in a range of 8.7 to 9.5, a cutoff wavelength in a range of 1160 nm to 1360 nm, and a zero-dispersion in a range of 1300 nm to 1323 nm. For example, when the MFD is 8.9, the optical fiber 100 demonstrates the cutoff of 1294 nm and the zero-dispersion of 1317 nm. Alternatively, when the MFD is 8.92, the optical fiber 100 demonstrates the cutoff of 1286 nm and the zero-dispersion of 1316 nm.

In yet another aspect of the present disclosure, the optical fiber 100 may be fabricated based on the above numerical values and may experience a macro bend loss of less than 0.3 db/Km for 10 turns, 30mm Mandrel diameter at a wavelength of 1625 nm. Particularly, the optical fiber 100 may experience the macro bend loss of less than 0.1 db/km for 10 turns, 30mm Mandrel diameter at the wavelength of 1550 nm. Moreover, the optical fiber 100 fabricated based on the above numerical values may experience the macro bend loss of less than 1.5 db/km for 1 turn, 20 mm Mandrel diameter at a wavelength of 1625 nm. Further, the optical fiber 100 may experience the macro bend loss of less than 0.5 db/km for 1 turn, 20 mm Mandrel diameter, at the wavelength of 1550 nm. Furthermore, the optical fiber 100 fabricated based on the above numerical values may experience the macro bend loss of less than 0.1 db/km for 10 turns, 30 mm Mandrel diameter at a wavelength of 1550 nm.

The optical fiber 100 may experience the macro bend loss of less than 0.1 db/km for 10 turns, 30 mm Mandrel diameter at the wavelength of 1550 nm.

Alternatively, the optical fiber 100 fabricated based on the above numerical values may experience the macro bend loss of less than 0.5 db/km for 1 turn, 20mm Mandrel diameter at the wavelength of 1550 nm. Specifically, the optical fiber 100 may experience the macro bend loss of less than 0.5 db/km for 1 turns, 20mm Mandrel diameter at the wavelength of 1550 nm.

Fig. 2 is a graphical representation illustrating a Refractive Index (RI) profile of the optical fiber in accordance with an embodiment of the present invention. The graph 200 has a curve 202 that represents the RI profile of the optical fiber 100. In the radius versus relative refractive index graphx-axis of the graph 200 represents values of the radius R1, the radius R2, and the radius R3 of the core 102, the inner cladding 104, and the outer cladding 106, respectively, and a y-axis of the graph 200 represents values of the relative refractive index Δ1%, the relative refractive index Δ2%, and the relative refractive index Δ3% of the core 102, the inner cladding 104, and the outer cladding 106, respectively.

As depicted in FIG. 2, the core 102 doped with the first and second up-dopants, the inner cladding 104 doped with the second up-dopant, and the undoped outer cladding 106 generates the RI profile. The refractive index Δ1 of the core 102 has a maximum value that is given by Δ1max. In particular, the core 102 defines a core region such that the refractive index Δ1 of the core 102 is realized in the core region (*i.e*., within the radius R1 of the core 102). Moreover, the inner cladding 104 defines an inner cladding region such that the refractive index Δ2 of the inner cladding 104 is realized in the inner cladding region (*i.e*., within the radius R2 of the inner cladding 104). Further, the outer cladding 106 may define an outer cladding region such that the refractive index Δ3 of the outer cladding 106 is realized in the outer cladding region *(i.e.,* within the radius R3 of the outer cladding 104).

The curve 202 transitions from the core region to the inner cladding region, thus generating the RI profile that is defined by a core peak 204 and an inner cladding peak 206. As shown by the curve 202, the core peak 204 is greater than the inner cladding peak 206. And, a peak radial distance R_{d} between the core peak 204 and the inner cladding peak 206 may be in a range of 9 µm to 10 µm. The peak radial distance R_{d} between the core peak 204 and the inner cladding peak 206 may be between (T1min + T2min) to (T1max + T2max).

For example, when T1min is 4.4 µm, T2min is 4.6 µm, T1max is 4.6 µm, and T2max is 5.4 µm, the radial distance between the core peak 204 and the inner cladding peak 206 is 4.4 + 4.6 to 4.6 + 5.4 i.e., 9 µm to 10 µm. Specifically, a low numerical value of the peak radial distance R_{d} (i.e., 9 µm to 10 µm) and the difference in the refractive indexes Δ1 and Δ2 may facilitate in reduction of attenuation due to reduction in the relative refractive index between the core 102 and the inner cladding 104.

The refractive index Δ2 of the inner cladding 104 may have the maximum value *i.e.,* Δ2max and the minimum value *i.e.,* Δ2min. Particularly, the curve 202 may transition from the core region to the inner cladding region when the refractive index Δ2 of the inner cladding 104 is at the minimum value i.e., Δ2min. Moreover, the curve 202 may transition from the inner cladding region to the outer cladding region when the refractive index Δ2 of the inner cladding 104 is at the maximum value *i.e.,* Δ2max.

In some aspects of the present disclosure, the maximum value *i.e*., Δ2max of the refractive index Δ2 is 0.03 and the minimum value *i.e.,* Δ2min of the refractive index Δ2 is 0.02. Further, as shown by the curve 202, the refractive index Δ3 of the outer cladding 106 is 0 along the thickness T3.

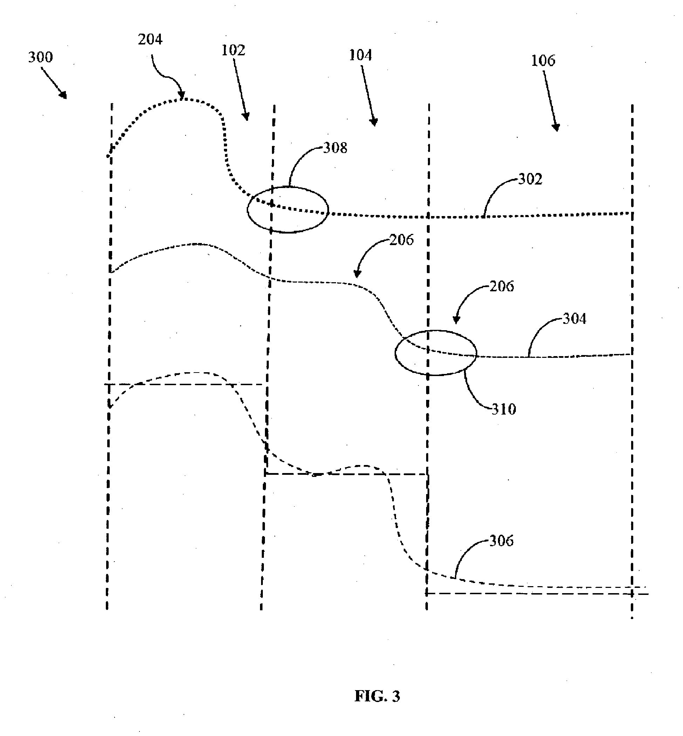

Fig. 3 is a snapshot illustrating a graphical representation depicting concentration profiles of first up dopant and second up dopant in the core 102, inner cladding 104, and the outer cladding 106 along with a resultant refractive index profile in accordance with another aspect of the present invention. The graph 300 may include a first curve 302, a second curve 304, and a third curve 306. In particular, the first curve 302 may depict a concentration profile of the first up dopant in the core 102, the inner cladding 104, and the outer cladding 106. Moreover, the first curve 302 depicts the core peak 204 that may be realized due to the up doping of the core 102 with the first up dopant (i.e., Cl) that may further facilitate the optical fiber 100 to have reduced attenuation without increasing macro bend losses. Further, the first curve 302 depicts that at a transition point 308 when the concentration profile transitions from the core 102 to the inner cladding 104, a first diffusion zone is formed that includes traces of the first up dopant diffusing from the core 102 to the inner cladding 104.

The second curve 304 may depict the inner cladding peak 206 that may be realized due to the up doping of the inner cladding 104 with the first up dopant *(i.e.,* CI). In particular,up doping may further facilitate the optical fiber 100 to have reduced attenuation without increasing macro bend losses. Moreover, the second curve 304 depicts that at a transition point 310 when the concentration profile transitions from the inner cladding 104 to the outer cladding 106, a second diffusion zone is formed that includes traces of the first up dopant diffusing from the inner cladding 104 to the outer cladding 106.

The third curve 306 may depict a resultant refractive index profile in the core 102, the inner cladding 104, and the outer cladding 106. The third curve 306 may be an actual resultant refractive index profile generated due to the up doping of the core 102 and the inner cladding 104 with the first and second up dopants.

An ideal refractive index profile is shown in Fig. 3 that depicts a step function.

Advantageously, the optical fiber 100 of the present disclosure may demonstrate reduced stresses and reduction in the attenuation. And, the up doping of the core 102 with Ge and Cl₂ and the up doping of the inner cladding 104 with Cl₂ may facilitate control of the microbend losses and macro-bend loss in the optical fiber 100. Moreover, the up doping of the core 102 with the first up-dopant (*i.e*., Ge) and the second up-dopant (*i.e*. Cl₂) and the up doping of the inner cladding 104 with the second up-dopant (*i.e*. Cl₂) may result in a net increase in the refractive index of the optical fiber 100 and thus facilitates the attenuation in the optical fiber 100 without causing hindrance in micro-bending. Further, the up doping of the inner cladding 104 with the second up-dopant (*i.e*., Cl₂) may reduce stresses in the optical fiber 100 due to reducing viscosity facilitating stress reduction between the core and the inner cladding 104. Furthermore, the up doping of the core 102 with the first and second up-dopants and the up doping of the inner cladding 104 with the second up-dopant *(i.e.,* Cl₂) may facilitate the traveling of the optical signal within the optical fiber 100.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber **characterized in that**:
a core extending along a central axis of the optical fiber, wherein the core is up-doped with at least a first up-dopant and a second up-dopant;
an inner cladding surrounding the core, wherein the inner cladding is up-doped with at least the second up-dopant; and
an outer cladding surrounding the inner cladding, wherein the outer cladding is undoped.

2. The optical fiber of claim 1, wherein the core, the inner cladding, and the outer cladding has a refractive index Δ1, a refractive index Δ2, and a refractive index Δ3, respectively, such that the refractive index Δ1 is greater than the refractive index Δ2 and the refractive index Δ2 is greater than the refractive index Δ3.

3. The optical fiber of claim 1, wherein the core has a relative refractive index Δ1% that is in range 0.2 % to 0.4 %, wherein the inner cladding has a relative refractive index Δ2% that is in range 0.01 % to 0.05 %, and wherein the outer cladding has a relative refractive index Δ3% that is equal to 0%.

4. The optical fiber of claim 1, wherein the core up-doped with first and second up-dopants, the inner cladding up-doped with the second up-dopant, and the undoped outer cladding 106 generates a Refractive Index (RI) profile that is defined by a core peak and an inner cladding peak, wherein the core peak is greater than the inner cladding peak.

5. The optical fiber of claim 4, wherein the core peak and the inner cladding peak has a peak radial distance therebetween, wherein the radial distance is in a range of 9 micrometers (µm) to 10 µm.

6. The optical fiber of claim 1, wherein the core and the inner cladding has the second up-dopant in first and second concentrations, respectively, wherein the first concentration is less than the second concentration.

7. The optical fiber of claim 8, wherein the first concentration of the second up-dopant in the core is in a range of 41% to 43% and the second concentration of the second up-dopant in the inner cladding 104 is in a range of 57% to 59%.

8. The optical fiber of claim 1, wherein concentration of the first up-dopant in the core is in a range of 0.25% to 0.3%.

9. The optical fiber of claim 1, wherein the core and the inner cladding has the second up-dopant in a first and second volumes, wherein the first volume is less than the second volume.

10. The optical fiber of claim 9, wherein the first volume of the second up-dopant in the core is in a range of 1850 ppm to 2100 ppm and the second volume of the second up-dopant in the inner cladding is in a range of 2490 ppm to 2800 ppm.

11. The optical fiber of claim 9, wherein the volume of the first up-dopant (*i.e.,* Ge) in the core may be in a range of 2500 Parts Per Million (ppm) to 3000 ppm.

12. The optical fiber of claim 1, wherein the relative refractive index Δ2% of the inner cladding is radially distributed with a maximum value Δ2max and a minimum value Δ2min, wherein the maximum value Δ2max is 0.03 and the minimum value Δ2min is 0.02.

13. The optical fiber of claim 1, wherein (i) an attenuation of the optical fiber at a wavelength of 1625 nanometers (nm) is less than 0.2, wherein the attenuation of the optical fiber at a wavelength of 1550 nm is less than 0.18, and wherein the attenuation of the optical fiber at a wavelength of 1310 nm is less than 0.32, (ii) a macro bend loss of the optical fiber for 10 turns, 30mm Mandrel diameter and at a wavelength of 1625 nm is less than 0.3 db/km, wherein the macro bend loss in the optical fiber for 1 turn, 20mm Mandrel diameter at the wavelength of 1625 nm is less than 1.5 db/km, wherein the macro bend loss of the optical fiber for 10 turn, 30mm Mandrel diameter at a wavelength of 1550 nm is less than 0.1 db/km, and wherein the macro bend loss of the optical fiber for 1 turns, 20mm Mandrel diameter at the wavelength of 1550 nm is less than 0.5 db/km, and (iii) a cable cutoff of the optical fiber is in a range of 1186nm to 1194 nm.

14. The optical fiber of claim 1, wherein the core has a radius R1 that is in range of 4 µm to 4.5 µm, wherein the inner cladding has a radius R2 that is in a range of 14 µm to 15 µm, and wherein the outer cladding has a radius R3 that is in range 61.5 µm to 62.5 µm.

15. The optical fiber of claim 13, wherein the radius R1, the radius R2, and the radius R3 is given by an average ratio (R3 - R1) / (R2 - R1), wherein the average ratio is in a range of 5.52 µm to 5.75 µm.
